# EUROPÄISCHE PATENTSCHRIFT

(11) **EP 0 586 620 B1**
(45) Veröffentlichungstag und Bekanntmachung des Hinweises auf die Patenterteilung: **14.12.1994**
(21) Anmeldenummer: 92924462.2
(22) Anmeldetag: 27.05.1992
(51) Int. Cl.: F23G 7/00, F42B 33/06, B21D 26/08, B08B 15/02

(54) **VERFAHREN ZUM UMWELTSCHONENDEN BETRIEB EINER SPRENGVORRICHTUNG SOWIE ZUR DURCHFÜHRUNG DIESES VERFAHRENS GEEIGNETE SPRENGVORRICHTUNG**
PROCESS FOR THE LOW-POLLUTION OPERATION OF AN EXPLOSION DEVICE AND SUITABLE EXPLOSION DEVICE FOR IMPLEMENTING THIS PROCESS
PROCEDE ASSURANT UN FONCTIONNEMENT NON POLLUANT D'UN DISPOSITIF PYROTECHNIQUE ET DISPOSITIF PYROTECHNIQUE CONVENANT POUR L'EXECUTION DE CE PROCEDE

(30) Priorität: 29.05.1991 DE 4117504
(43) Veröffentlichungstag der Anmeldung: 16.03.1994
(73) Patentinhaber: Hampel, Heinrich, Dr., B-4850 Moresnet-Chapelle (BE)
(72) Erfinder: Hampel, Heinrich, Dr., B-4850 Moresnet-Chapelle (BE)
(74) Vertreter: König, Werner, Dipl.-Ing.
(86) Internationale Anmeldenummer: DE9200431
(87) Internationale Veröffentlichungsnummer: WO9221918

(56) Entgegenhaltungen:
- DE-A- 2 645 347
- GB-A- 1 128 248
- GB-A- 1 248 098
- GB-A- 2 121 935
- US-A- 3 611 766
- NAVY TECHNICAL DISCLOSURE BULLETIN, Bd. 2, Nr. 6, Juni 1977, Arlington US Seiten 55 - 58; P.A. BRETTNACHER: 'AMMUNITION INCINERATOR'

## Beschreibung

Die Erfindung betrifft ein Verfahren zum umweltschonenden Betrieb einer mindestens eine Explosionskammer aufweisenden Sprengvorrichtung, insbesondere zum explosiven Entsorgen von Sprengstoff und Giftstoffen sowie zur explosiven Herstellung von Werkstücken, bei dem Sprenggut in die Explosionskammer durch einen Kammereinlaß hindurch eingebracht wird, in der Explosionskammer dann ein Soll-Unterdruck erzeugt und im Anschluß daran das Sprenggut durch explosive Verbrennung in vorwiegend gasförmige Reaktionsprodukte umgewandelt wird, welche schließlich aus der Explosionskammer abgeführt werden. Sie betrifft ferner eine Sprengvorrichtung zur Durchführung des Verfahrens mit mindestens einer in ein Fundament eingesetzten Explosionskammer, die mit einem Ein- und Auslaß, mit Kompensatoren in der Kammerwand zum Aufnenmen von Detonationsenergie und mit einem angeschlossenen Vakuumsystem versehen ist.

Aus der DE-OS 2 645 347 ist bereits bekannt, Sprenggut vor dem Einbringen in die Explosionskammer zunächst außerhalb der Kammer zu präparieren, daraufhin durch Offnen der Explosionskammer das so vorbereitete Sprenggut in die Kammer einzubringen, die Detonation unter Unterdruck durchzuführen und nach erfolgter Detonation zum Herausnehmen der Reaktionsprodukte oder der bearbeiteten Werkstoffe die Explosionskammer wieder ganz zu öffnen.

Eine derartige Verfahrensweise zum Einbringen des Sprenggutes in die Explosionskammer sowie zum Herausnehmen der Reaktionsprodukte hat den Nachteil, daß zunachst bei der Vorbereitung des Sprenggutes auf die Explosivbehandlung schädliche Bestandteile in die Umwelt gelangen können.

Darüberhinaus können während der Verbrennungsreaktion auftretende giftige Bestandteile beim Offnen der Kammer an die Umwelt gelangen. Außerdem müssen vor dem Offnen der Explosionskammer lange Wartezeiten für die Reinigung des Kammerinnenraums in Kauf genommen werden.

Demgegenüber besteht die Aufgabe der vorliegenden Erfindung darin, ein Verfahren und eine Sprengvorrichtung der eingangs erwähnten Art anzugeben, mit dem zum einen die bei der Präparation des Sprenggutes sowie bei der Explosion auftretenden giftigen Stoffe von der Umwelt ferngehalten werden, zum anderen aber auch die Beschickung der Explosionskammer mit Sprenggut zeitlich rationeller gestaltet werden kann.

Diese Aufgabe wird erfindungsgemäß bei einem Verfahren der eingangs erwähnten Art dadurch gelöst, daß das Sprenggut in eine Schleusenkammer eingebracht wird, daß in der Schleusenkammer ein Unterdruck erzeugt wird, daß das Sprenggut dann aus der Schleusenkammer in die gegenüber der Umgebung stets gas- und druckdicht abgeschottete Explosionskammer transportiert wird, daß die gasförmigen Reaktionsprodukte aus der Explosionskammer bis zur Erreichung des Soll-unterdrucks abgesaugt werden und daß nach der explosiven Verbrennung in fester Form vorliegende Reaktionsprodukte und/oder Transportmittel durch die Schleusenkammer aus der Explosionskammer herausgeführt werden. Bei dieser Verfahrensweise steht die Explosionskammer während des Betriebs kontinuierlich unter Unterdruck, wodurch zunächst einmal längere Pumpzeiten und beträchtlicher Energieaufwand für die Wiedererreichung des Soll-Unterdrucks vermieden werden. In diesem Zusammennang sei darauf hingewiesen, daß typische Kammervolumina in der Größenordnung einiger hundert Kubikmeter liegen. Die aus der Explosionskammer abgesaugten gasförmigen Reaktionsprodukte könnten dann im nächsten Schritt, beispielsweise über bekannte Filtersysteme, entsorgt werden. Letztlich wird durch dieses Verfahren gewährleistet, daß keinerlei Reaktionsprodukte aus der Explosionskammer an die Umwelt gelangen können.

Das erfindungsgemäße Verfahren kann so ausgeführt werden, daß die gasförmigen Explosionsprodukte durch Anschluß der Explosionskammer an eine auf Soll-Unterdruck gehaltene Unterdruckkammer abgesaugt werden. Dieses Vorgehen eignet sich insbesondere für relativ kleine Explosionskammern, denen jeweils nur entsprechend kleine Sprenggutmengen zugeführt werden.

Das erfindungsgemäße Verfahren sieht ferner vor, daß der Unterdruck in der Schleusenkammer jeweils durch Verbindung dieser Kammer mit der Explosionskammer oder der Unterdruckkammer herbeigeführt wird. Aufgrund des sehr kleinen Raumvolumens der Schleusenkammer verglichen mit dem der Explosionskammer und der Unterdruckkammer läßt sich hierdurch die Schleusenkammer in relativ kurzen Zeiten evakuieren.

Ein weiterer erfindungsgemäßer Verfahrensschritt sieht vor, daß das Sprenggut vor dem Transport in die Schleusenkammer zunächst einem gas- und druckdicht mit dieser verbundenen Elaborationsraum zugeführt wird, wodurch etwaige schon vor der Verbrennung vorliegende Bestandteile des Sprenggutes von der Umwelt ferngehalten werden. Es ist damit beispielsweise möglich, die einzelnen Komponenten, aus denen der Sprengstoff gemischt werden soll, zunächst in geschlossenen Behältern in den Elaborationsraum zu führen und erst dort die endgültige Sprengstoffmischung herzustellen. Hier können auch zu entsorgende Giftstoffe dem Sprenggut beigegeben werden.

Das erfindungsgemäße Verfahren sieht ferner vor, daß eine Schleusenkammer mit oder ohne Elaborationsraum für das Einbringen des Sprenggutes in die Explosionskammer sowie zum Herausführen der in fester Form vorliegenden Reaktionsprodukte und/oder Transportmittel verwendet wird. Durch den gleichzeitigen Betrieb zweier Schleusen mit je einem Elaborationsraum kann schon während der Entsorgung der Reaktionsprodukte sowie der Transportmittel für das Sprenggut in der einen Schleusenkammer die Explosionskammer mit weiterem Sprenggut aus der zweiten Schleusenkammer beschickt werden. Hierdurch läßt sich ein nahezu kontinuierlicher Betrieb der Explosionskammer erreichen, bei dem die Explosionskammer zeitlich optimal ausgelastet ist.

Das erfindungsgemäße Verfahren sieht ferner vor, daß man die Menge des Sprenggutes für jede einzelne Explosionskammer so bestimmt, daß nach der explosiven Verbrennung des Sprenggutes der Kammerinnendruck von 0,5 bar nicht überschritten wird.

Schließlich sieht das erfindungsgemäße Verfahren vor, daß der Soll-Unterdruck zwischen 0,1 und 0,2 bar liegt und daß man die Menge des Sprenggutes so bestimmt, daß nach der explosiven Verbrennung des Sprenggutes ein Kammerinnendruck von 0,2 bis 0,3 bar erhalten wird. Da hierbei die Reaktionsprodukte entsprechend der Druckdifferenz von etwa 0,1 bar sehr konzentriert, d.h. nur wenig mit Luft vermischt, auftreten, minimiert sich die Abpumpzeit für das Wiedererreichen des Soll-Unterdrucks.

Die Erfindung sieht ferner bei einer Sprengvorrichtung der eingangs erwähnten Art vor, daß der Ein- und Auslaß jeder Explosionskammer durch mindestens eine Schleusenkammer mit wenigstens einer Innen- sowie einer Außentür gebildet ist. Durch eine solche Schleusenkammer läßt sich Sprenggut ohne nennenswerte Druckänderungen und Umweltbelastungen in die Explosionskammer einführen.

Die erfindungsgemäße Sprengvorrichtung kann ferner so ausgebildet sein, daß die Innentür der Schleusenkammer außenseitig und die Außentür innenseitig mit je einer Dichtkante an der Explosionskammer zusammenarbeiten. Damit wird die durch das Verfahren geforderte Funktionsweise der Schleusenkammer gewährleistet. Im übrigen arbeitet die Innentür bei diesem Aufbau der Schleusenkammer während einer Detonation und dem damit verbundenen erhöhten Druck in der Explosionskammer besonders sicher, da sie in diesem Fall entsprechend dem Druckgradienten automatisch dichtet.

Die erfindungsgemäße Sprengvorrichtung kann ferner so ausgebildet sein, daß für die Innentür der Schleusenkammer eine Rückhaltevorrichtung vorgesehen ist, die die Innentür gegen einen entgegengesetzt wirkenden Druckgradienten an die Dichtkante anpreßt. Beim Belüften der Schleusenkammer bei gleichzeitig evakuierter Explosionskammer würde die Innentür der Schleusenkammer in die Explosionskammer hineingezogen. Um dem entgegenzuwirken wird diese Tür mit Hilfe einer üblichen mechanischen Vorrichtung gas- und druckdicht gegen die Kammerinnenseite gepreßt.

Die erfindungsgemäße Sprengvorrichtung kann weiter so ausgebildet sein, daß die Schleusenkammer mit dem Vakuumsystem der Explosionskammer verbindbar ist. Der Verbund von Schleusenkammer und Explosionskammer durch ein geschlossenes Vakuumsystem ist zum einen besonders kostengünstig, zum anderen ermöglicht er einen einfachen und sicheren Druckausgleich zwischen der Schleusenkammer und der Explosionskammer beispielsweise vor dem Offnen, der Innentür der Schleusenkammer.

Die erfindungsgemäße Sprengvorrichtung kann ferner so ausgebildet sein, daß die Schleusenkammer mit wenigstens einem Elaborationsraum vakuumdicht verbunden ist, der seinerseits mit einer Tür versehen und an das Vakuumsystem der Explosionskammer angeschlossen ist. Die Vorzüge eines zusätzlichen Elaborationsraumes wurden bereits bei den Verfahrensansprüchen dargelegt.

Die erfindungsgemäße Sprengvorrichtung kann ferner so ausgebildet sein, daß die Explosionskammer/Explosionskammern an eine gemeinsame Unterdruckkammer angeschlossen ist/sind, deren Volumen größer ist als das doppelte Volumen einer Explosionskammer und die mit einer Vakuumpumpe zusammenarbeitet.

Im folgenden Teil der Beschreibung werden drei Ausführungsbeispiele der erfindungsgemäßen Sprengvorrichtung anhand von Zeichnungen beschrieben und die für den Betrieb der jeweiligen Sprengvorrichtung angemessene Verfahrensweise erläutert. Im einzelnen zeigen:
- Fig. 1: einen Schnitt durch die erfindungsgemäße Sprengvorrichtung mit einer Explosionskammer, einer Schleusenkammer und einem Vakuumsystem,
- Fig. 2: eine Sprengvorrichtung gemäß Fig. 1, allerdings mit einem zusätzlichen Elaborationsraum sowie einem erweiterten Vakuumsystem,
- Fig. 3: eine Sprengvorrichtung gemäß Fig. 2, allerdings mit je zwei Schleusen und Elaborationsräumen und
- Fig. 4: eine schematische Ansicht der Verbindung mehrerer Explosionskammern mit einer Unterdruckkammer.

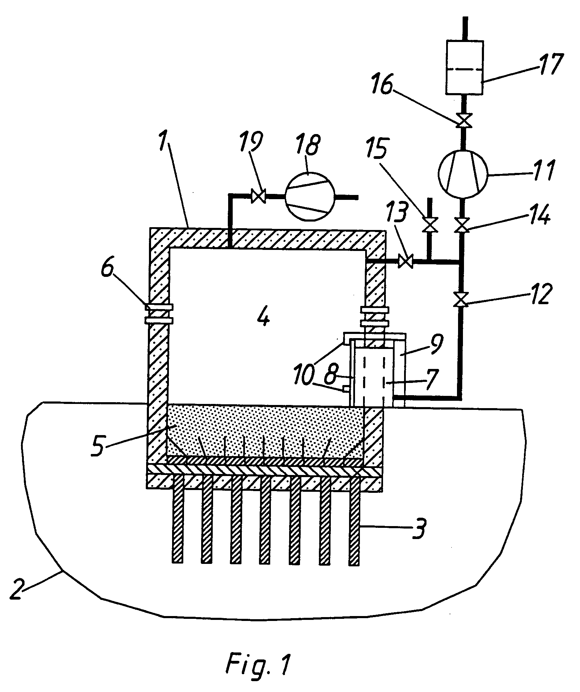

In Fig. 1 ist eine Sprengvorrichtung gemäß der Erfindung in einer einfachen Ausführungform dargestellt. Eine Explosionskammer 1 ist in ein Fundament 2 eingelassen und über Fundamentstäbe 3 verankert. Das Fundament 2 bildet im Innenraum 4 der Explosionskammer 1 einen Sprengtisch 5, auf dem das Sprenggut für die Explosion gelagert werden kann. Weiter sind schematisch Kompensatoren 6 angedeutet, durch die ein Teil der bei der Detonation auftretenden Druckwellen ausgeglichen werden kann. In der kammerwand befindet sich eine zweitürige Schleusenkammer 7 mit einer inneren sowie äußeren Schleusentür 8 und 9. Zusatzlich ist schematisch eine Rückhaltevorrichtung 10 für die innere Schleusentür 8 eingezeichnet. Die Explosionskammer 1 und die Schleusenkammer 7 sind gemeinsam mit einem Vakuumsystem verbunden, bestehend aus Vakuumpumpe 11 und verschiedenen Ventilen 12 bis 16. Am Ausgang der Vakuumpumpe 11 ist zusätzlich noch eine Filteranlage 17 zur Entsorgung der anfallenden Giftstoffe, insbesondere bei der explosiven Verbrennung, angedeutet. Auf der gegenüberliegenden Seite der Explosionskammer 1 befindet sich ein Ventilator 18, durch den über ein Ventil 19 bei Bedarf Spülungen des Innenraums 4 der Explosionskammer 1 zu Reinigungzwecken erfolgen können.

Beim Betrieb der hier gezeigten Sprengvorrichtung, beispielsweise zur Entsorgung von Sprengstoff, sei die Explosionskammer 1 zu Beginn bereits bis auf einen Soll-Unterdruck von etwa 0.1 bar evakuiert. Durch Öffnen der Ventile 12 und 15 wird nun zunächst die Schleusenkammer 7 belüftet. Dabei garantiert die Rückhaltevorrichtung 10 der inneren Schleusentür 8 eine Abdichtung der Explosionskammer 1 gegen den Außendruck. Nach Öffnen der äußeren Schleusentür 9 wird das Sprenggut in die Schleusenkammer 7 eingebracht und die äußere Schleusentür 9 wieder verschlossen. Danach kann die Schleusenkammer 7 nach Schließen des Ventils 15 durch Offnen der Ventile 12 und 13 durch die Explosionskammer 1 hindurch evakuiert werden. Aufgrund des wesentlich kleineren Kammervolumens der Schleusenkammer 7, verglichen mit der Explosionskammer 1, wird dieses Abpumpen bis zum Soll-Unterdruck relativ schnell erfolgen. Nachdem beide Druckwerte übereinstimmen, wird die innere Schleusentür 8 geöffnet und das Sprenggut in die Explosionskammer 1 eingebracht. Nach Verschließen der inneren Schleusentür 8 kann nun die explosive Verbrennung erfolgen. Aufgrund des hierbei auftretenden Druckgefälles in Richtung Schleusenkammer 7 wird die dichtende Wirkung der inneren Schleusentür 8 noch verstärkt. Die durch die explosive Umwandlung gebildeten gasförmigen Reaktionsprodukte können nun über die Vakuumpumpe 11 aus der Explosionskammer 1 abgepumpt und gegebenenfalls an eine herkömmliche Filteranlage 17 weitergegeben werden. Die ursprüngliche Ausgangsmenge des Sprenggutes ist nun so gewählt worden, daß bei der Detonation der Innendruck der Explosionskammer 1 nur um etwa 10% des Außenluftdruckes angestiegen ist und damit nur diese relativ geringe Druckdifferenz abgepumpt werden muß, um den Soll-Unterdruck wieder zu erreichen.

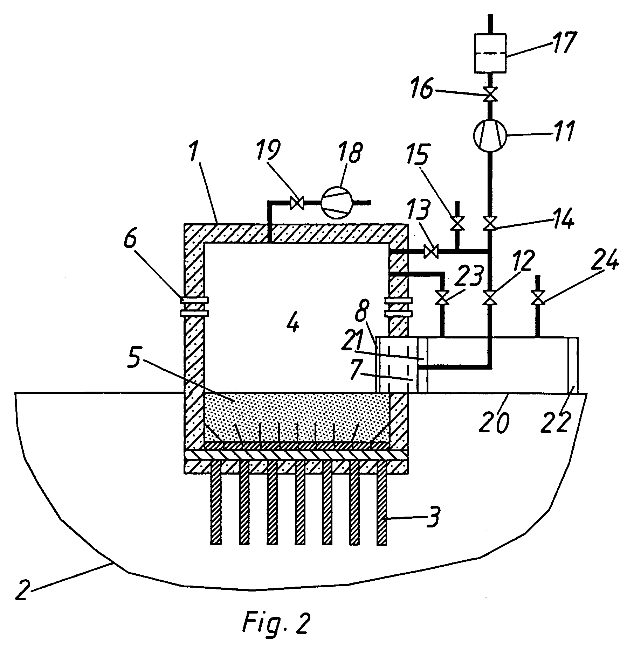

In Fig. 2 ist nun dieselbe Sprengvorrichtung wie in Fig. 1 zu sehen, allerdings mit einem zusätzlich vor der Schleusenkammer 7 befindlichen Elaborationsraum 20, der wesentlich größer als die Schleusenkammer 7 ist. Der Elaborationsraum 20 ist mit der Schleusenkammer 7 gas- und druckdicht verbunden. Zwischen Schleusenkammer 7 und Elaborationsraum 20 befindet sich eine Zwischentür 21, am Eingang des Elaborationsraumes 20 eine Außentür 22. Der Elaborationsraum 20 ist über eine Vakuumausgleichsleitung 23 direkt mit der Explosionskammer 1 verbunden und kann so abgepumpt werden. Er kann zudem auch über die Druckausgleichsleitung 24 unabhängig belüftet werden.

Beim Betrieb der in Fig. 2 gezeigten Sprengvorrichtung kann ähnlich wie bei der in Fig. 1 dargestellten Sprengvorrichtung verfahren werden. Jedoch im Unterschied dazu können hier in den Abmessungen wesentlich größere Sprenggutsätze in die Explosionskammer 1 verfrachtet werden. Außerdem können die Ausgangskomponenten für den Sprengstoff zunächst in sicheren Behältern in den Elaborationsraum 20 transportiert werden, und es kann nach dem Abschotten dieses Raumes 20 gegenüber der Umgebung das Mischen des endgültigen Sprenggutes vorgenommen werden. Im Anschluß daran kann nun der Elaborationsraum 20 über die Vakuumausgleichsleitung 23 evakuiert und das Sprenggut in der bereits genannten Weise über die Schleusenkammer 7 in die Explosionskammer 1 gebracht werden. Danach wird gehauso weiterverfahren wie bei der Sprengvorrichtung entsprechend Fig. 1.

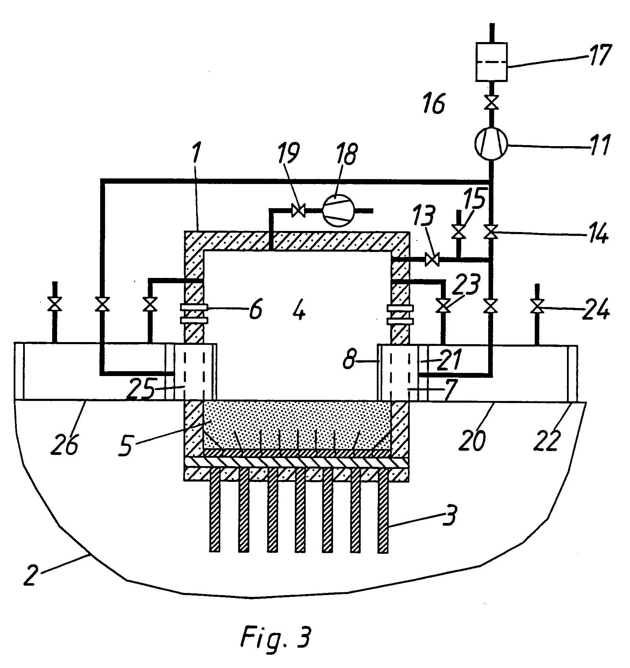

In Fig. 3 ist schließlich eine Sprengvorrichtung ensprechend Fig. 2 zu sehen, allerdings mit jeweils zwei Schleusen 7 und 25 sowie zwei Elaborationsräumen 20 und 26. Der Aufbau dieser beiden Schleusensysteme 7,20 und 25,26 sowie deren Verbindung mit dem Vakuumsystem der Explosionskammer 1 ist gleich.

Auch beim Betrieb der in Fig. 3 gezeigten Sprengvorrichtung kann ähnlich wie bei der in Fig. 2 dargestellten Sprengvorrichtung verfahren werden. Im Unterschied dazu kann aber einerseits das Sprenggut über das erste Schleusensystem 7 und 20 in der in Fig. 2 beschriebenen Weise in die Explosionskammer 1 geführt werden. Über das zweite Schleusensystem 25 und 26 können etwaige in fester Form anfallenae Reaktionsprodukte oder Transportmittel, wie z.B. Paletten, aus der Explosionskammer 1 herausgeführt werden. Es ist nun auch möglich, während der noch andauernden Entsorgung der Reaktionsprodukte in dem zweiten Schleusensystem 25 und 26 die Explosionskammer 1 durch das Schleusensystem 7 und 20 schon mit weiterem Sprenggut zu bestücken. Dadurch wird die Explosionskammer 1 zeitlich optimal ausgelastet.

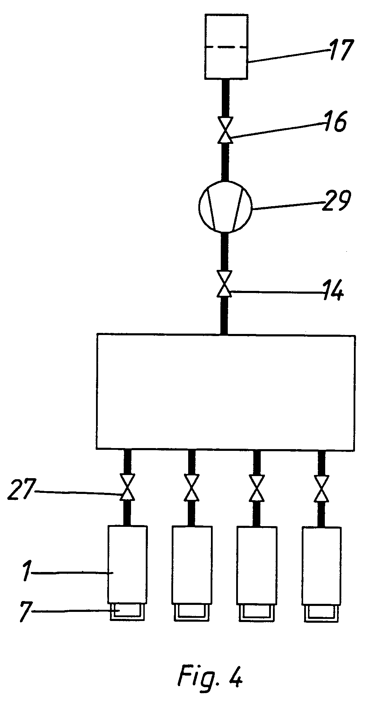

Bei der Ausführungsform nach Fig. 4 sind die Explosionskammern 1 jeweils über ein Ventil 27 an eine Unterdruckkammer 28 angeschlossen. Eine Vakuumpumpe 29 stellt in der Unterdruckkammer 28 den Soll-Unterdruck ein. Wenn nach einem Explosionsvorgang das Ventil 27 der betreffenden Explosionskammer 1 geöffnet wird, werden aufgrund des vorliegenden Druckgefälles die in der Explosionskammer 1 vorliegenden Gase in die Unterdruckkammer 28 gesaugt und von dort mittels der Vakuumpumpe 29 über Filter abgeführt oder einer anderen Verarbeitung zugeführt

## Patentansprüche

1. Verfahren zum umweltschonenden Betrieb einer mindestens eine Explosionskammer aufweisenden Sprengvorrichtung, insbesondere zum explosiven Entsorgen von Sprengstoff und Giftstoffen sowie zur explosiven Herstellung von Werkstücken, bei dem das Sprenggut in die Explosionskammer durch einen Kammereinlaß hindurch eingebracht wird, in der Explosionskammer dann ein Soll-Unterdruck erzeugt und im Anschluß daran das Sprenggut durch explosive Verbrennung in vorwiegend gasförmige Reaktionsprodukte umgewandelt wird, welche schließlich aus der Explosionskammer abgeführt werden, dadurch gekennzeichnet, daß das Sprenggut in eine Schleusenkammer eingebracht wird, daß in der Schleusenkammer ein Unterdruck erzeugt wird, daß das Sprenggut dann aus der Schleusenkammer in die gegenüber der Umgebung stets gas- und druckdicht abgeschottete Explosionskammer transportiert wird, daß die gasförmigen Reaktionsprodukte aus der Explosionskammer bis zur Erreichung des Soll-Unterdrucks abgesaugt werden und daß nach der explosiven verbrennung in fester Form vorliegende Reaktionsprodukte und/oder Transportmittel durch die Schleusenkammer aus der Explosionskammer herausgeführt werden.

2. Verfahren nach Anspruch 1, dadurch gekennzeichnet, daß die gasförmigen Explosionsprodukte durch Anschluß der Explosionskammer an eine auf Soll-Unterdruck gehaltene Unterdruckkammer abgesaugt werden.

3. Verfahren nach Anspruch 1 oder 2, dadurch gekennzeichnet, daß der Unterdruck in der Schleusenkammer jeweils durch Verbindung dieser kammer mit der Explosionskammer oder der Unterdruckkammer herbeigeführt wird.

4. Verfahren nach einem der vorhergehenden Ansprüche, dadurch gekennzeichnet, daß das Sprenggut vor dem Transport in die Schleusenkammer zunächst einem gas- und druckdicht mit dieser verbundenen Elaborationsraum zugeführt wird, wodurch etwaige schon vor der Verbrennung vorliegende Bestandteile des Sprenggutes von der Umwelt ferngehalten werden.

5. Verfahren nach einem der vorhergehenden Ansprüche, dadurch gekennzeichnet, daß eine Schleusenkammer mit oder ohne Elaborationsraum für das Einbringen des Sprenggutes in die Explosionskammer sowie zum Herausführen der in fester Form vorliegenden Reaktionsprodukte und/oder Transportmittel verwendet wird.

6. Verfahren nach einem der vorhergehenden Ansprüche, dadurch gekennzeichnet, daß man die Menge des Sprenggutes für jede einzelne Explosionskammer so bestimmt, daß nach der explosiven Verbrennung des Sprenggutes der Kammerinnendruck von 0,5 bar nicht überschritten wird.

7. Verfahren nach Anspruch 6, dadurch gekennzeichnet, daß der Soll-Unterdruck zwischen 0,1 und 0,2 bar liegt und daß man die Menge des Sprenggutes so bestimmt, daß nach der explosiven Verbrennung des Sprenggutes ein Kammerinnendruck von 0,2 bis 0,3 bar erhalten wird.

8. Sprengvorrichtung zur Durchführung des Verfahrens nach einem der vorhergehenden Ansprüche, mit mindestens einer in ein Fundament eingesetzten Explosionskammer, die mit einem Ein- und Auslaß, mit Kompensatoren in der Kammerwand zum Aufnehmen von Detonationsenergie und mit einem angeschlossenen Vakuumsystem versehen ist, dadurch gekennzeichnet, daß der Ein- und Auslaß jeder Explosionskammer (1) durch mindestens eine Schleusenkammer (7) mit wenigstens einer Innen- (8) sowie einer Außentür (9) gebildet ist.

9. Sprengvorrichtung nach Anspruch 8, dadurch gekennzeichnet, daß die Innentür (8) der Schleusenkammer (7) außenseitig und die Außentür (9) innenseitig mit je einer Dichtkante an der Explosionskammer (1) zusammenarbeiten.

10. Sprengvorrichtung nach Anspruch 8 oder 9, dadurch gekennzeichnet, daß für die Innentür (8) der Schleusenkammer (7) eine Rückhaltevorrichtung (10) vorgesehen ist, die die Innentür (8) gegen einen entgegengesetzt wirkenden Druckgradienten an die Dichtkante anpreßt.

11. Sprengvorrichtung nach einem der Ansprüche 8 bis 10, dadurch gekennzeichnet, daß die Schleusenkammer (7) mit dem Vakuumsystem (11-16) der Explosionskammer (1) verbindbar ist.

12. Sprengvorrichtung nach einem der Ansprüche 8 bis 11, dadurch gekennzeichnet, daß die Schleusenkammer (7) mit wenigstens einem Elaborationsraum (20) vakuumdicht verbunden ist, der seinerseits mit einer Tür (22) versehen und an das Vakuumsystem (11-16) der Explosionskammer (1) angeschlossen ist.

13. Sprengvorrichtung nach einem der Ansprüche 8 bis 12, dadurch gekennzeichnet, daß die Explosionskammer/Explosionskammern (1) an eine gemeinsame Unterdruckkammer (28) angeschlossen ist/sind, deren Volumen größer ist als das doppelte Volumen einer Explosionskammer (1) und die mit einer Vakuumpumpe (29) zusammenarbeitet.

## Claims

1. Claimed is a procedure for the low-pollution operation of an explosion device which contains at least one explosion chamber, specifically said procedure is intended for the explosive disposal of explosives and poisons and for the explosive forming of workpieces, the procedure is characterized by the fact that the explosive mixture is transferred to the explosion chamber through a chamber entry facility, that a vacuum is generated to a pre-set level in the explosion chamber, and that the explosive mixture is transformed into predominantly gaseous reaction products by explosive combustion, and that the reaction products are removed from the explosion chamber. The procedure is furthermore characterized by the fact that the explosive mixture is introduced into a lock chamber, that in this lock chamber a vacuum is produced, that the explosive mixture is then transferred from the lock chamber into the explosion chamber, which is always kept gas- and pressure-tight versus the environment, and that the gaseous reaction products are evacuated from the explosion chamber until a pre-set vacuum is achieved, and that any solid reaction products which may be present after the explosive combustion and/or any carrier media are removed from the explosion chamber through the lock chamber.

2. Claimed is a procedure according to Claim 1, characterized by the fact that the gaseous explosion products are evacuated to a vacuum chamber, which is kept at a pre-set vacuum, by connecting the explosion chamber to said vacuum chamber.

3. Claimed is a procedure according to Claims 1 and 2, characterized by the fact that the negative pressure in the lock chamber is produced respectively by providing a connection of this chamber with either the explosion chamber or the vacuum chamber.

4. Claimed is a procedure according to any one of the preceding claims, characterized by the fact that the explosive mixture, before being transferred to the lock chamber, is first introduced to a hermetically sealed preparation chamber which is connected to the lock chamber, and that thereby any components of the explosive mixture can be kept away from the environment, even before the explosive combustion process.

5. Claimed is a procedure according to any of the preceding claims, characterized by the fact that a lock chamber, with or without a preparation chamber, is used for introducing the explosive mixture to the explosion chamber, and is also used for removal of any solid reaction products and/or carrier means.

6. Claimed is a procedure according to any of the preceding claims, characterized by the fact that the amount of explosive for each individual explosion chamber is chosen in such a manner that the internal pressure in the chamber, after the explosive combustion event, does not exceed 0.5 bar.

7. Claimed is a procedure according to Claim 6, characterized by the fact that the pre-set vacuum pressure is between 0.1 - 0.2 bar, and that amount of explosive mixture is so chosen that, after the explosive combustion event, an internal chamber pressure of 0.2 - 0.3 bar is maintained.

8. Claimed is an explosion device for practicing the procedure according to any one of the preceding claims, said device to consist of at least one explosion chamber which is anchored in a foundation, provided with entry and removal facilities, with compensating devices to absorb the explosive energy in the chamber wall, and which is connected to a closed vacuum system, said explosion device being characterized by the fact that the entry and exit facilities of each explosion chamber (1) are formed by at least one lock chamber (7) with at least one inner door (8) and one outer door (9).

9. Claimed is an explosion device according to Claim 8, characterized by the fact that the inner door (8) of lock chamber (7) on its outside, and outer door (9) on its inside, are cooperating with respectively one sealing lip each at the explosion chamber (1).

10. Claimed is an explosion device according to Claim 8 or Claim 9, characterized by the fact that the inner door (8) of lock chamber (7) is provided with a restraining device (10) which forces inner door (8) to the sealing lip against a counteracting pressure gradient.

11. Claimed is an explosion device according to any one of claims 8 to 10, characterized by the fact that lock chamber (7) can be connected with the vacuum system (11-16) of explosion chamber (1).

12. Claimed is an explosion device according to any one of claims 8 to 11, characterized by the fact that a lock chamber (7) is connected with at least one preparation chamber (20) under vacuum-tight conditions, and that said preparation chamber is provided with a door (22) and is connected to the vacuum system (11-16) of explosion chamber (1).

13. Claimed is an explosion device according to any one of claims 8 to 12, characterized by the fact that the explosion chamber, or explosion chambers (1), are connected to a common vacuum chamber (28), which features a volume which is larger than twice the volume of any one explosion chamber (1) and that said vacuum chamber is connected to and works with a vacuum pump (29).

## Revendications

1. Procédé assurant un fonctionnement non polluant d'un dispositif pyrotechnique présentant au moins une chambre d'explosion, en particulier pour l'élimination par explosion de produits pyrotechniques et de produits toxiques ainsi que pour la fabrication explosive de pièces à usiner, dans lequel le produit pyrotechnique est introduit dans la chambre à explosion par une entrée en forme de chambre; une sous-pression nominale est alors créée dans la chambre à explosion; suite à cela, le produit pyrotechnique est transformé en produits de réaction pour la plupart gazeux par combustion explosive, produits de réaction qui sont ensuite envoyés hors de la chambre à explosion, **caractérisé** **en ce que** le produit pyrotechnique est introduit dans une chambre sas, qu'une sous-pression est créée dans le sas, que le produit pyrotechnique est alors transporté hors du sas dans la chambre à explosion étanche aux gaz et à la pression par rapport à l'environnement, que les produits de réaction gazeux sont aspirés de la chambre à explosion jusqu'à ce qu'une sous-pression nominale soit atteinte et qu'après la combustion explosive les produits de réaction restants sous forme solide et/ou le moyen de transport sont retirés de la chambre à explosion par le sas.

2. Procédé selon la revendication 1, caractérisé en ce que les produits gazeux de l'explosion peuvent être aspirés dans une chambre sous-pressurisée maintenue à une pression nominale par un raccord en provenance de la chambre à explosion.

3. Procédé selon la revendication 1 ou 2, caractérisé en ce que la sous-pression dans le sas est toujours obtenue par liaison de cette chambre à la chambre à explosion ou à la chambre sous-pressurisée.

4. Procédé selon l'une des revendication ci-dessus, caractérisé en ce que le produit pyrotechnique, avant son transport dans le sas, passe d'abord dans un espace d'élaboration étanche aux gaz et à la pression qui est relié au sas de sorte que déjà avant la combustion, les composants utilisés pour le produit pyrotechnique sont à l'abri de l'environnement.

5. Procédé selon l'une des revendications ci-dessus, caractérisé en ce qu'un sas avec ou sans espace d'élaboration est utilisé pour l'introduction du produit pyrotechnique dans la chambre à explosion ainsi que pour l'extraction des produits de réaction restants sous forme solide et/ou du système de transport.

6. Procédé selon l'une des revendications ci-dessus, caractérisé en ce que l'on détermine la quantité de produit pyrotechnique de chaque chambre à explosion de sorte qu'après la combustion explosive du produit pyrotechnique, la pression interne de la chambre ne dépasse pas 0,5 bar.

7. Procédé selon la revendication 6, caractérisé en ce que la pression nominale se trouve entre 0,1 et 0,2 bar et que l'on détermine la quantité de produit pyrotechnique de sorte qu'après la combustion explosive du produit pyrotechnique, une pression interne de la chambre de 0,2 à 0,3 bar est conservée.

8. Dispositif pyrotechnique convenant pour l'exécution de ce procédé présentant au moins une chambre d'explosion située dans un fondement, chambre d'explosion qui est équipée d'une entrée et d'une sortie, de compensateurs dans les parois de la chambre pour l'absorption de l'énergie de la détonation et d'un système à vide qui y est relié, caractérisé en ce que l'entrée et la sortie de chaque chambre à explosion (1) est formée au moins d'un sas (7) possédant au moins une porte intérieure (8) ainsi qu'une porte extérieure (9).

9. Dispositif pyrotechnique selon la revendication 8, caractérisé en ce que la porte intérieure (8) du sas (7) est dotée vers l'extérieur et la porte extérieure (9), vers l'intérieur d'un joint d'étanchéité vis-à-vis de la chambre à explosion (1).

10. Dispositif pyrotechnique selon la revendication 8 ou 9, caractérisé en ce qu'un dispositif d'arrêt du retour (10) est prévu pour la porte intérieure (8), dispositif qui presse la porte intérieure (8) contre le bord d'étanchéité contre une pression de sens opposé.

11. Dispositif pyrotechnique selon l'une des revendications 8 à 10, caractérisé en ce que le sas (7) peut être relié au système à vide (11-16) de la chambre à explosion (1).

12. Dispositif pyrotechnique selon l'une des revendications 8 à 11, caractérisé en ce que le sas (7) est relié de manière étanche au vide à au moins un espace d'élaboration (20) qui est lui-même équipé d'une porte (22) et relié au système à vide (11-16) de la chambre à explosion (1).

13. Dispositif pyrotechnique selon l'une des revendications 8 à 12, caractérisé en ce que la(les) chambre(s) à explosion est(sont) reliée(s) à une chambre sous-pressurisée commune dont le volume est plus important que le double du volume d'une chambre à explosion et qui fonctionne avec une pompe à vide (29).
